# EUROPEAN PATENT SPECIFICATION

(11) **EP 1 181 649 B1**
(45) Date of publication and mention of the grant of the patent: **05.03.2003**
(21) Application number: 00919902.7
(22) Date of filing: 29.03.2000
(51) Int. Cl.: G06F 17/00

(54) **METHOD AND APPARATUS FOR CREATING DIGITAL ARCHIVES**
VERFAHREN UND GERÄT ZUM ERSTELLEN VON DIGITALEN ARCHIVEN
PROCEDE ET APPAREIL DE CREATION D'ARCHIVES NUMERIQUES

(30) Priority: 25.05.1999 US 135867 P; 28.03.2000 US 537073
(43) Date of publication of application: 27.02.2002
(73) Proprietor: SWTV Production services, Inc., Tempe, AZ 85281 (US)
(72) Inventor: LUSK, Dennis, Tampa, FL 33609 (US); MCGILL, Michael, El Paso, TX 79936 (US); FREEMAN, Mark, Grapevine, TX 76051 (US)
(74) Representative: Patentanwälte Wenzel & Kalkoff
(86) International application number: US0008487
(87) International publication number: WO00072186

(56) References cited:
- US-A- 5 485 611
- US-A- 5 488 433
- US-A- 5 835 667
- US-A- 5 852 435

## Description

### FIELD OF THE INVENTION

The invention relates generally to methods and apparatus of archiving audio and video data. More particularly, the invention relates to systems for storing, viewing and searching audio and video data.

### BACKGROUND OF THE INVENTION

Over the past several decades, television stations and other broadcast media have created millions of hours of film, videotape and the like capturing news, sports, entertainment and other information. Although much of the video content created and broadcast has been irretrievably lost, many hours of television and other video content remain archived on film, tape or other analog media. Existing video and film archives are disadvantageous in that they typically occupy large amounts of space. For example, a single hour of video imagery stored on 2" tape generally weighs in excess of twelve pounds and occupies more than 500 cubic inches of shelf space. Moreover, conventional analog media degrades quickly over time, thus causing the preserved image to degrade or disappear in a relatively short period of years.

Further, presently available technologies are unable to conveniently index the archival footage so that a particular video clip can be sought out and readily retrieved. When video images are recorded, the cameraperson typically keeps a data log (such as a collection of individual pages called "shot sheets") that records the content of the video tape. Such logs are generally manually created, and are maintained in conjunction with the video tape. A typical "shot sheet" entry describes the recorded image along with an indication of the number of hours, minutes, seconds and frames that have elapsed since the beginning of the tape when the described image was shot. When the tape is reviewed at a later date, then, the relevant "shot sheet" can serve as an index to the tape's content.

Examples of prior art technologies involving video management include U.S. Patent No. 5,852,435 to Vigneaux, et al., directed towards a newsroom production system, and U.S. Patent No. 5,488,433 to Washino, et al., directed towards a method for producing video programs.

With the advent of digital video formats such as the MPEG standards created by the Motion Pictures Experts Group, digital storage techniques are now available that will degrade much slower than analog tape and permit storage in a variety of compact formats such as digital video disks (DVDs), optical analog laser disks, digital audio tapes (DATs) and CD-ROMs. Digital formats maintain high quality image data for long periods of time, and are generally capable of relatively quick retrieval. Several devices provide for mass storage of digital media. The Sony Model DMS-8400, for example, is an archival storage device that includes bins and robotic mechanisms for storing and retrieving multiple DATs containing MPEG or other digital data.

Although such devices provide high capacity storage of digital data, a problem remains in efficiently converting archival analog footage to the new digital media. It is therefore desired to create a system for archiving information and images stored on videotape, film and other analog media into a convenient digital format. It is also desired to create a search and retrieval system that allows users to readily find and retrieve particular clips of archival footage.

### SUMMARY OF THE INVENTION

In accordance with one embodiment of the present invention, an analog to digital conversion system suitably includes an encoder producing one or more streams of digital data, each stream optionally including a digital timecode that corresponds to the timecode on the original analog tape. In accordance with one aspect of the invention, a high-resolution digital stream is maintained in a first digital medium for archival purposes. A second, low-resolution video stream is optionally provided to a search engine that includes a database of content information. The database is configured to allow users to search the low-resolution stream for a particular video segment and to view the segment from either the high or low-resolution video streams based upon their common, synchronized digital timecodes.

### BRIEF DESCRIPTION OF THE DRAWING FIGURE

The above and other features and advantages of the present invention are hereinafter described in the following detailed description of illustrative embodiments to be read in conjunction with the accompanying drawing figures, wherein like reference numerals are used to identify the same or similar parts in the similar views, and:
FIGURE 1 is a block diagram of an exemplary archive creation system;
FIGURE 2 is a block diagram of an exemplary archive creation system;
FIGURE 3 is a block diagram of an exemplary embodiment of an encoder;
FIGURE 4 is a schematic of an exemplary encoder system suitable for assembly in a vehicle;
FIGURE 5A is a schematic of an exemplary rack system suitable for use in a vehicle or in a stationary encoding system;
FIGURE 5B is a top view of an exemplary semi-trailer housing an exemplary encoding system;
FIGURE 5C is a side view of an exemplary semi-trailer housing an exemplary encoding system;
FIGURE 6A is a block diagram of an exemplary search engine;
FIGURE 6B is an exemplary screen display from an exemplary search engine;
FIGURE 7 is a block diagram of an exemplary playback/decoder system;
FIGURE 8 is a block diagram of an exemplary playback/decoder system; and
FIGURE 9 is an exemplary screen display from an exemplary playback/decoder system.

### DETAILED DESCRIPTION OF PREFERRED EXEMPLARY EMBODIMENTS

To simplify the description of the exemplary embodiments, the invention is frequently described as pertaining to video archiving systems, and broadcast television stations and networks in particular. It will be appreciated, however, that many applications of the present invention could be formulated. For example, the present invention could be used to archive motion picture film data, closed circuit video information, multimedia content, photographic, stereoscopic, holographic or any other form of moving video, still images, data or other information. Similarly, the present invention could be used to create archives of audio signals (for example in MP3 format), textual information, or any other form of data or information that may be represented in a digital format. With regard to video input, the present invention is suitable for use with NTSC video formats as well as high-definition digital television (HDTV) formats, internationally-used PAL formats, and the like.

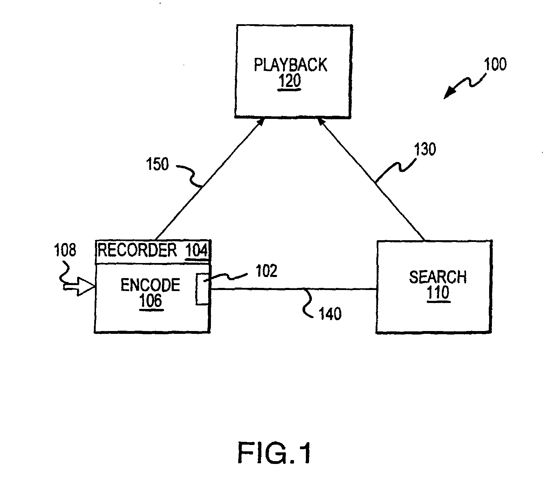

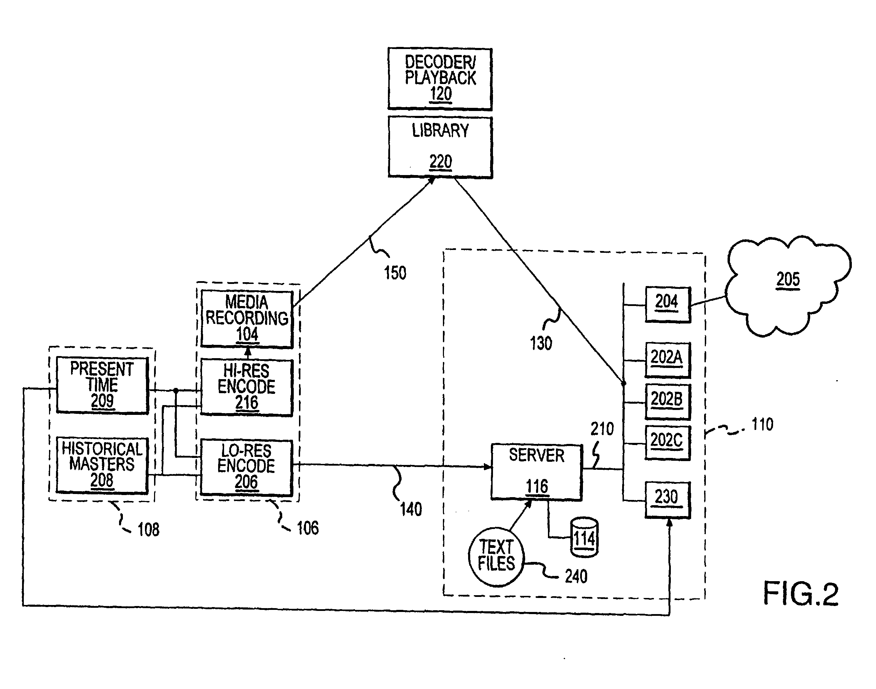

With momentary reference to Figures 1 and 2, an exemplary archival system 100 suitably includes an encoder 106, a playback unit 120 and a search engine 110. Encoder 106 suitably receives input content 108 from historical masters 208 (e.g. analog tape or film) or present time material 209 (i.e. live camera footage). Encoder 106 suitably converts the input material 108 to a digital format that can be recorded on a digital medium such as a DVD-ROM, DAT, laserdisk, digital memory, hard disk or the like. Digital content can be suitably produced in a variety of formats, and can be simultaneously provided to search engine 110 and to a digital archive. Search engine 110 facilitates convenient search and retrieval of digital content that can be retrieved from the archive and viewed on playback unit 120.

In accordance with the present invention, the digital signals provided by encoder 106 suitably include timecodes associated with input data 108. For example, encoder 106 may mark each input data frame (e.g. each video frame) with a digital code that identifies the location of the frame in the archive and allows for convenient retrieval of the frame. One time code scheme is described in Society of Motion Pictures and Television Engineers (SMPTE) Standard 12M dated 1986. Various timecode schemes include marking the frame with the actual time of day that the frame was recorded, the serialized frame number since the beginning of the tape, or a discontinuous timecode that facilitates accurate searching. In the latter case, each frame is suitably encoded with the time elapsed since the beginning of the input tape to create a unique identifier for each frame on the tape. For example, encoder 106 may be configured to place the hours/minutes/seconds since the beginning of the tape into the digital output. In addition, a serialized number for frames elapsed during the last second of encoding or since some other point of reference (e.g. the start of the DVD or other recording media, the start of the source tape, or some other point of reference) may be placed on the digital output. Alternatively, the serialized portion of the timecode is replaced by or used in conjunction with a fractionalized time indicator (e.g. tenths or hundredths of a second). Any of the various timecode formats may be suitably encoded in any portion of the standard MPEG header such as in the "user" or "timecode" fields. In some embodiments of the present invention, only a portion of the input video frames are encoded with time stamps, or various timecode methods are combined. In still other embodiments (particularly those embodiments that eliminate the search engine 110), the timecode is eliminated partially or entirely.

As noted above, "shot sheet" data 240 typically corresponds to hours/minutes/seconds/frames since the beginning of the analog tape, along with a written description of the tape content. One time code scheme suitable for use with the present invention involves converting the original analog timecode to a digital equivalent that is retained in the timecode field of output data streams 140 and 150. By placing a time code in the output digital stream that corresponds to the timecode on the original analog tape, the "shot sheet" data composed for the original analog tape may be used to quickly find indexed content on the archived medium, as described more fully below.

Encoder 106 produces one or more streams of digital output data in any suitable format such as MPEG-1, MPEG-2, MPEG-4, H.261, H.263 or the like. MPEG-1 is a relatively low bit-rate, low-resolution image format that is fully described in ISO Standard 11172 dated 1993. MPEG-2 is a comparatively high-bit-rate, high-resolution video standard that is fully described in ISO Standard 13818 dated 1996. Various implementations and details of the MPEG standards are described in the book MPEG Video Compression Standard, Joan Mitchell et al., ISBN number 0-412-08771-5. In accordance with one aspect of the invention, basic standards are readily modified in various implementations. For example, various bit rates and types of image compression can be selected based upon the needs of a particular implementation. Moreover, the various header fields described by the standards (such as the timecode fields) are frequently omitted or modified in various MPEG implementations, all of which are within the ambit of the present invention.

Various suitable encoding devices are available including, for example, the Vibrint model MPression encoder and the Minerva Compressionist encoder. In various embodiments of the invention, optional recorder 104 receives the digitized signal from encoder 106 and stores the data on the selected medium or media. Alternatively, recorder 104 and encoder 106 are suitably combined into a single device.

In various embodiments of the invention (and as described more fully below), encoder 106 suitably produces multiple streams of digital data. In such embodiments, encoder 106 may be implemented with multiple encoding devices. For example, the Vibrint model 100 includes a chassis for accepting multiple encoder cards such that each encoder card supports a separate video stream on a separate output channel. Alternatively, multiple encoder units from various manufacturers can be combined to produce any desired combination of digital output channels. In some embodiments (particularly those requiring multiple output video streams from encoder 106), a working sub-master copy of the input data 108 is optionally produced. The working copy (not shown in Figure 1) is an interim copy of input date 108 that reduces the need for multiple reads of potentially sensitive input data 108, and may be erased after encoding is complete, if desired. The interim copy is preferably a high bit-rate, error-correcting component digital data format such as a Sony Digi-Beta or Panasonic D5, although any other digital or analog format such as DAT or analog tape could be used. Other embodiments simultaneously encode multiple streams of digital data by routing the input signal simultaneously to multiple encoder units, such as multiple encoding cards on a Vibrint Model 100.

In embodiments such as those shown in Figures 1 and 2, encoder 106 suitably produces a first video stream 150 at a high bit-rate (e.g. above about 4 mega bits per second, preferably about 10 mega bits per second), high-resolution format (such as MPEG-2) and a second video stream 140 in a relatively low bit-rate (e.g. below about 1,800 kilobits per second, preferably about 1,200 kilobits per second), low-resolution format (such as MPEG-1). Each video stream is suitably produced by a separate encoding device (such as encoders 206 or 216 in Figure 2), or by a hybrid encoder capable of producing multiple output streams from a single input. High-resolution output 150 is recorded on any suitable format for archival purposes, as discussed above. The media embodying high-resolution output 150 may be organized for storage in any desired fashion. For example, output 150 may be stored on DAT tape and placed in one or more Sony Model DMS-8400 archive devices to form a library 220. Alternatively, library 220 may be stored on DVD-ROMs and warehoused or otherwise stored in any suitable form prior to retrieval. Because DVD-ROMs and other digital media are significantly smaller, lighter and more efficient than typical analog media, warehousing requirements are dramatically reduced. Moreover, digital media are much less susceptible to image degradation over time than analog forms of storage.

Embodiments including low-resolution output 140 suitably provide a relatively low-resolution signal (such as an MPEG-1 stream) to a search engine 110 via a data link (e.g. fiber optic or other high-speed data connection, modem link, wireless link or the like) or via transferable media (e.g. DVD-ROM, CD-ROM, DAT, etc.). Various embodiments include a computer server (such as a server based upon the Windows NT product available from the Microsoft Corp. of Redmond, Washington) that provides backup storage of encoded data 140.

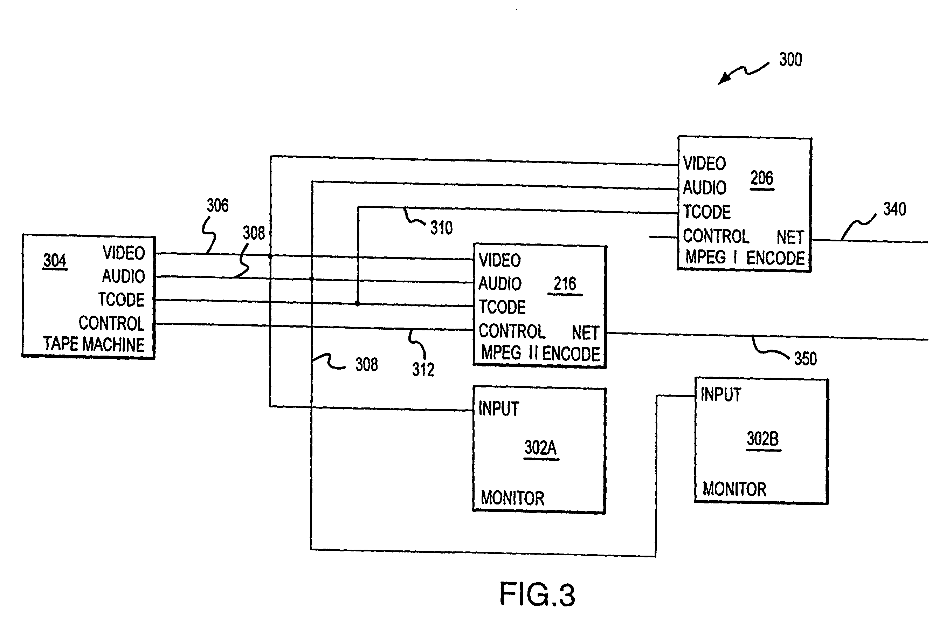

With reference to Figure 3, an alternate embodiment of encoding system 106 suitable for assembly into a vehicle that can be placed on location with a television station or other content source suitably includes digitizers, encoders, data connections and an optional server. Combining a number of encoders into units placed on a vehicle provides a number of advantages. First, the amount of time needed to create a large digital archive can be significantly reduced as many analog sources are simultaneously archived to digital format. Additionally, by placing the encoding equipment onto a vehicle that can be located at a source facility (e.g. a television station), the administration and risk of loss or damage associated with inventorying, packaging and shipping the potentially voluminous quantities of analog media are eliminated.

As can be readily ascertained from Figure 3, an analog media player 304 such as a tape machine suitably provides an analog video signal 306 and an analog audio signal 308 to encoders 206 and 216. It will be appreciated that any number of encoders could be used with various embodiments, with various encoders producing digital output in a variety of formats (e.g. MPEG-1, MPEG-2 and the like). Video and audio input signals 306 and 308 may also be provided to optional monitor devices 302A and 302B, respectively. A signal 310 corresponding to the timecode from the analog master is also suitably provided from the analog media player to encoders 206 and 216, which encode the timecode from the analog master into the digital output stream. An optional control signal 312 is also provided to encoder 216 and/or to encoder 206. Encoders 206 and 216 provide output as required, such as directly to a recording device or to a data network, as discussed below.

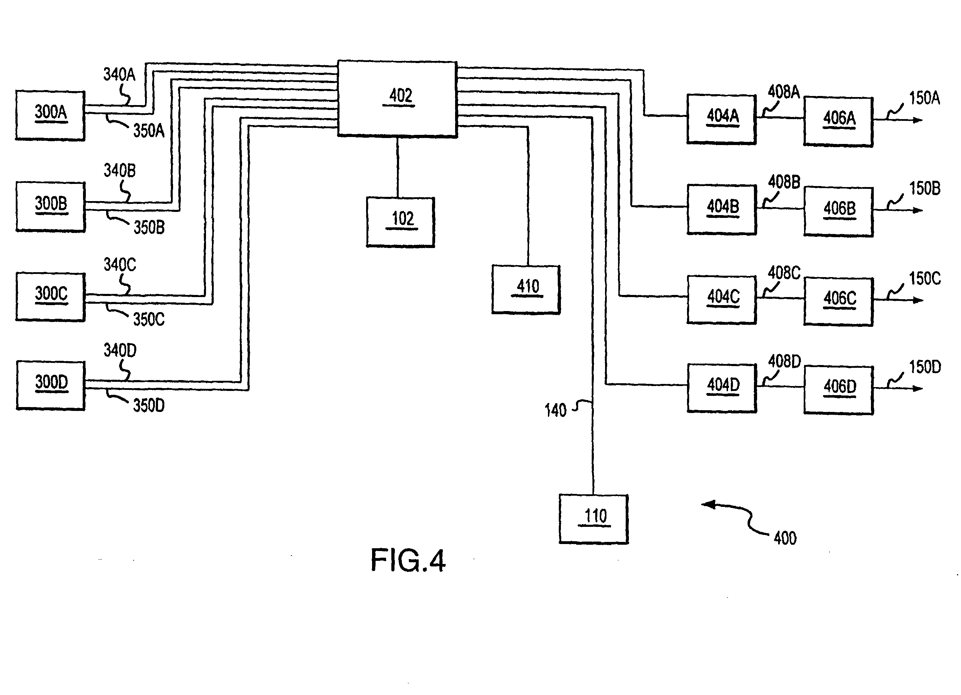

Referring now to Figure 4, a multiple-encoder unit 400 suitably includes multiple encoders 300A-D providing outputs 340A-D and 350A-D to a network such as an FDDI or ethernet hub 402. Although only four encoders are shown in Figure 4, it will be appreciated that any number of encoders could be combined into a single mobile or fixed facility system. It is estimated that a unit with 32 encoders, for example, could archive approximately 5000 hours of content each month. Similarly, a 64-encoder unit could archive approximately 10,000 hours of programming each month.

One or more data controllers 404A-D suitably receive digital data from network 402 and provide the data via data interfaces 408A-D to recording devices 406A-D, respectively. Interface 408A-D is any suitable form of data interface such as a SCSI, PCI or other data channel. Alternatively, controllers 404A-D may be omitted entirely such that recording devices 406A-D are coupled directly to network 402. As with the encoders 106, it will be appreciated that any number of recording devices could be used with the system, and the number of recording devices need not parallel the number of encoding devices. Similarly, any form of recordable media could be used with the present invention, and therefore any suitable recording devices 406 such as DVD-ROM writers, CD-ROM writers, hard disk drives, floppy disk drives, DAT recorders or the like could be used. In various embodiments, an optional CD-ROM writer 410 *is* included in tandem with other media writers to provide a convenient mode of storage for short video clips or other data Additionally, in various embodiments, network 402 suitably provides datastream 140 to search engine 110.

Server 102 is communicably coupled with network 402 such that the server is capable of monitoring and controlling the archive process, as well as providing an optional backup function. Although not shown in Figure 4, it will be understood that various monitoring equipment such video and audio monitors and digital computers (each having, for example, a display, a keyboard and a mouse) could be connected to 402 to assist a human operator in administering the archive system. Alternatively, monitoring and control of the system could be partially or entirely automated. In various embodiments, content is selectively placed on digital media based upon human selections or automatic controls in order to, for example, eliminate commercials, reduce long pauses in speeches, debates or sporting events, or the like.

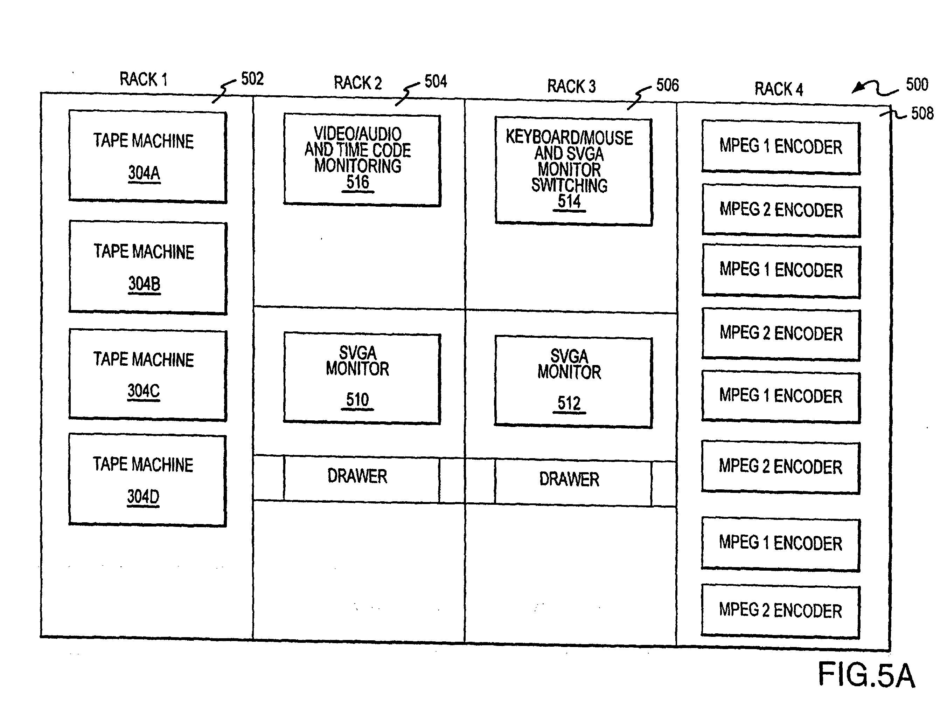

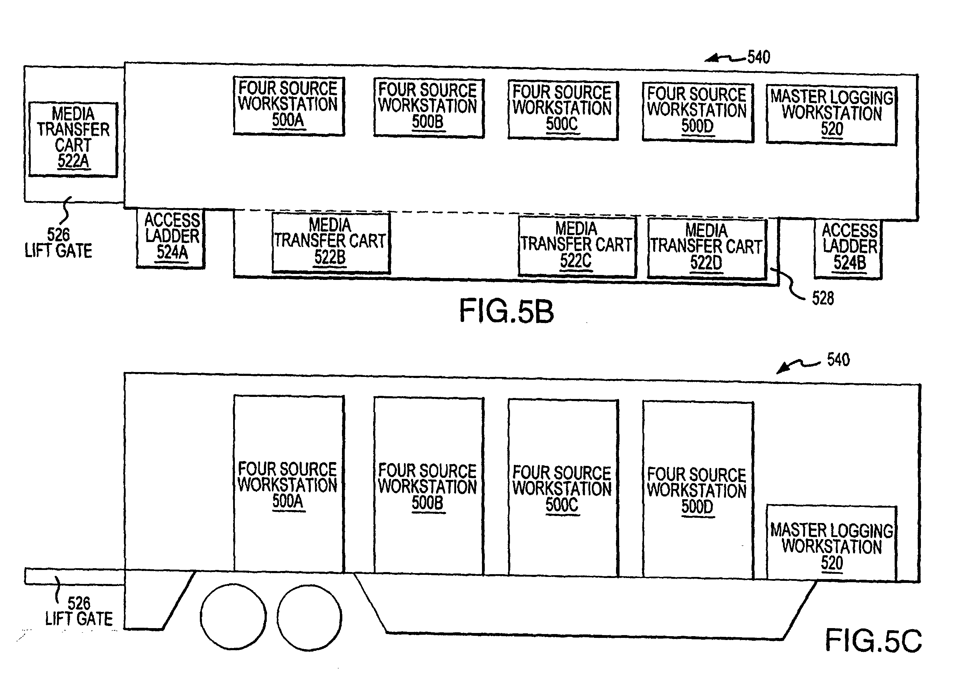

Figures 5A, 5B and 5C provide more detailed schematics of an exemplary encoder system layout suitable for use in a semi-truck trailer. Figure 5A, for example, shows a workstation 500 that includes rack units 502, 504, 506 and 508 as well as one or more video monitors 510 and 512. Although the various components of encoding system 106 could of course be installed into rack units in any manner, the embodiment shown in Figure 5A includes four tape machines 304A-D installed in rack 502 and four sets of encoders 206A-D and 216A-D in rack 508. Racks 504 and 506 suitably include monitoring equipment such as timecode monitor 516 and control computer 514, which suitably includes a keyboard, mouse and monitor, as applicable. The various tape machines and encoders are suitably connected via a data network 402 (not shown in Figure 5A) or other suitable connection.

Figures 5B and 5C show top and side views of an exemplary semi-trailer 540 that includes four four-source workstations 500A, 500B, 500C and 500D. A master logging workstation that suitably includes server 102 (not shown in Figure 5) or other hardware used to administer, monitor and control the archive system as appropriate is also provided. In various embodiments, side 528 of trailer 540 may be configured to expand to provide extra space as necessary and to contract when trailer 540 is in transit. Access to trailer 540 is suitably provided by access ladders 524A and 524B, as well as by lift gate 526. In various embodiments, one or more transfer carts 522 are provided such that the carts may be raised and lowered from the trailer via lift 526 to facilitate transfer of analog media into and out of trailer 540. A technician suitably loads analog media onto media cart 522 at a customer facility, for example, and transports the media to trailer 540 via the cart and gate 526 such that source material is readily available at each workstation 500. It will be appreciated that many different layouts for stationary or mobile encoding stations could be formulated, all within the ambit of the present invention.

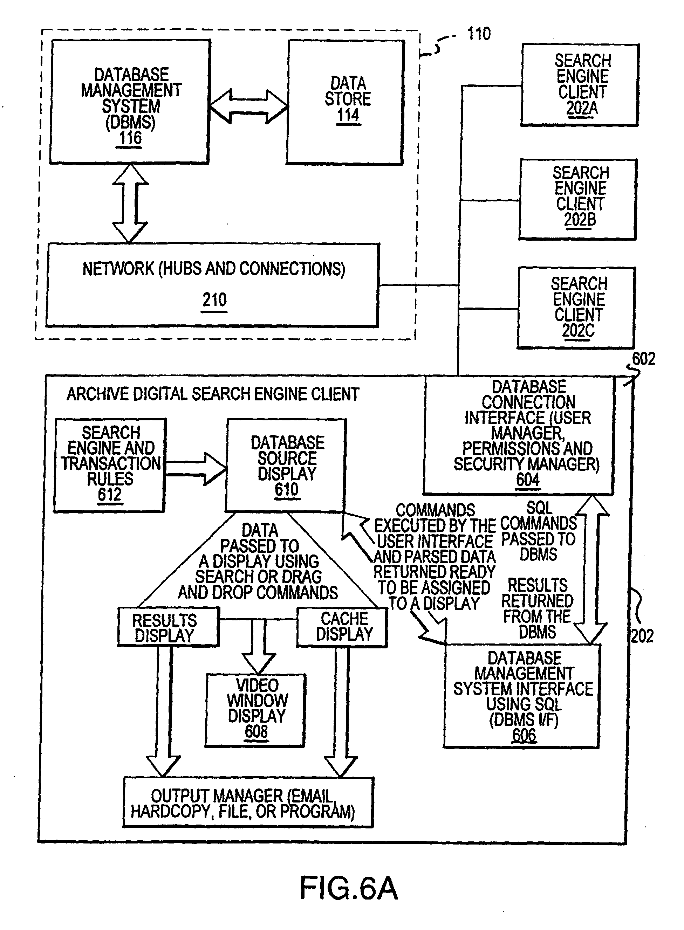

Referring now to Figure 6A, search engine 110 suitably includes a data repository 114 and a database management system (DBMS) 116. DBMS 116 suitably receives a digital data stream 140 from encoder 106 and stores the data in repository 114. DBMS 116 also maintains information (i.e. meta-data) about the encoded stream in a database 114. DBMS 116 is any database product such as SQL server from the Microsoft Corporation, Oracle8 software from the Oracle Corporation in Mountain View, California, DB2 database server from IBM, or the like running on a personal computer, UNIX workstation, minicomputer, or the like. Alternatively, database 110 may be configured to run on any personal computer or redundant arrays of inexpensive disks (RAID) system such as a model RAIDstack available from the AIWA corporation, preferably with a tape backup system that protects against the loss of video image data, running, for example, software available from the EXEBYTE corporation.

Meta-data stored in database 114 suitably includes date, tape number, and timecode data relating to information contained on data stream 140. Additionally, various embodiments of the database include textual descriptions of the video indexed in the database according to timecodes. The textual descriptions may be input in any manner such as manual entry, scanning of written notes (such as "shot sheet" notes 240 made at the time the content was created), electronic conversion of audio content present in the datastream, or the like. In some embodiments, an administrator may enter textual descriptions on the video content as the digital archive is created. Alternatively, the "shot sheet" notes or other written descriptions of the content may be scanned and converted into the proper database format (such as by any form of optical character recognition (OCR) software), or the written descriptions are entered into the database through any suitable technique.

The textual descriptions in database 110 suitably facilitate searching of the database to locate particular video segments desired. Users at workstations 202A-D interact with server 116 via network 210 to place various queries to database 114 and to view image clips from server 116. For example, users can query a particular episode of a favorite program, or an interview with a particular guest on a talk show, or a particular play in a sporting event. In various embodiments, access to server 116 is provided via the Internet 205 through security firewall 204 (best seen in Figure 2). Firewall 204 suitably controls access to network 210 from network 205 though router access control lists, hardware or software controls, or the like.

Referring again to Figure 6A, a search engine client program 602 running on workstations 202A-D suitably formats the users' query (for example, in SQL or any other database query language) and forwards the data request to server 116 for processing. The query is formed on database source display 610 based upon, for example, various search rules 612 that are related to the search software and the particular format of database used. The query is passed to DBMS 116 via database system interface 606 (which suitably converts the users query into SQL or another suitable format) and connection interface 604 (which suitably manages user accounts, security and permissions). DBMS 116 may be configured to receive user requests via network 210, searches data repository 114 and returns tape number and timecode information related to the query, along with any other information necessary to locate the desired clip on server 116. The database provides sufficient information (including tape number, timecode, etc. as necessary) to identify the particular video clip identified by the search. The server provides the requested image to the proper workstation 202.

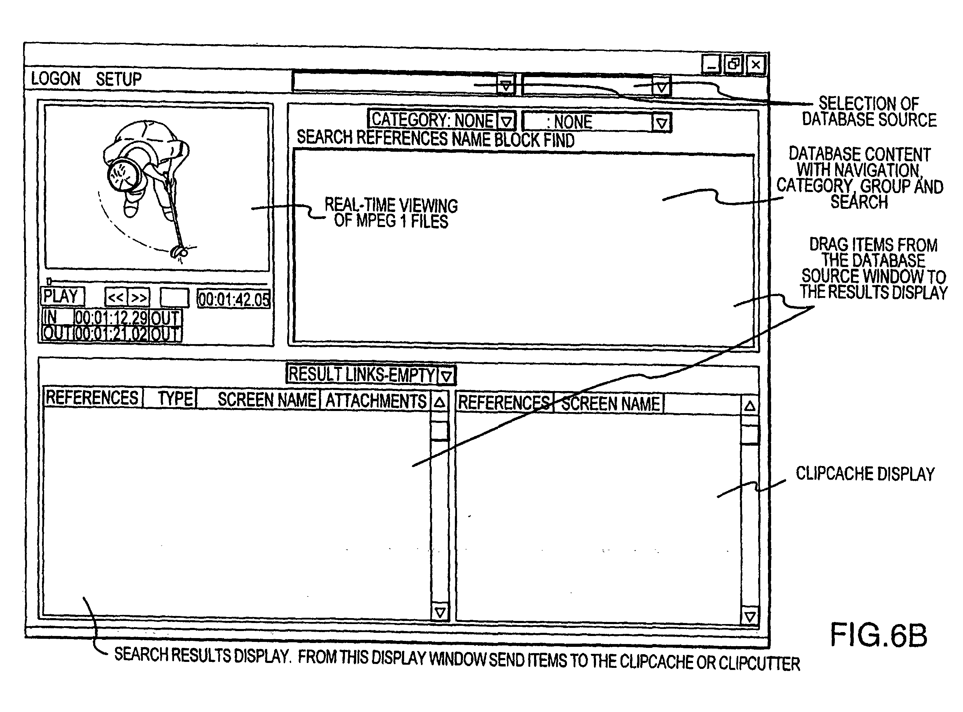

Client software 602 suitably receives the image data via connection interface 604 and database system interface 606, and displays the results to video display 608 via database display driver 610. The user can then review the clip, and forward the clip to an editing/production system 230 if desired. Alternatively, the user can save, email or print the results, as appropriate. An exemplary embodiment of a screen display from client software 602 is shown in Figure 6B.

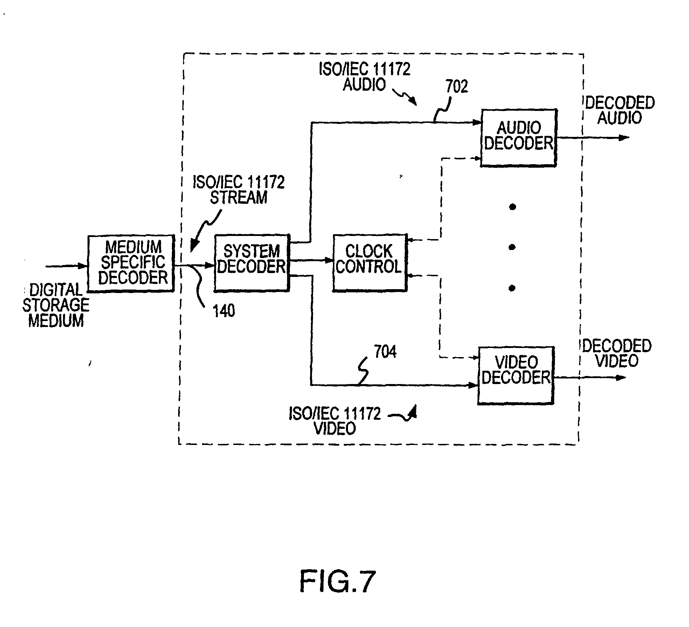

As shown in Figure 7, datastream 140 is suitably decoded by separating the digital stream into an audio component 702 and a video component 704, or though any other suitable method of decoding. Alternatively, the user can forward timecode and tape number information (or other information sufficient to locate the particular clip) to production workstation 230 (Figure 2), which may then suitably retrieve the high-resolution clip from library 220.

Various embodiments of search engine 110 further include edit decision list (EDL) capability on server 116 or database 114. The EDL is a list of timecode locations on each tape that require scene changes or edits. By maintaining edit requirement information in a database, search times associated with edits are significantly reduced.

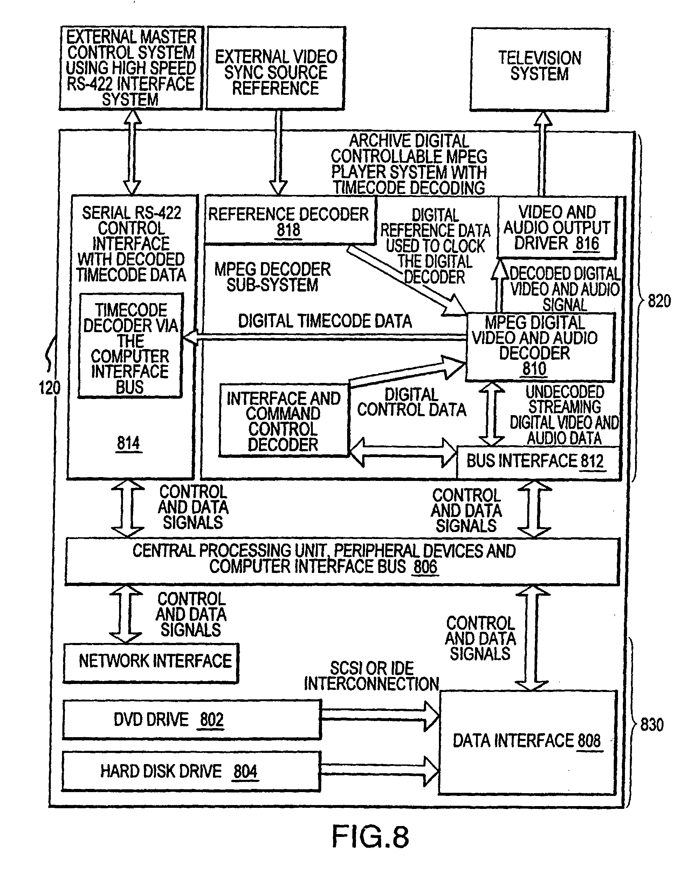

With reference to Figure 8, playback unit 120 is any device capable of reading media embodying archive data stream 150. The type of playback device 120 required varies widely upon the particular implementation, and many devices for reading DVD, CD-ROM, DAT, laserdisk and other formats are commercially available. For example, a digital DVD player could be used to read MPEG2 data recorded on a recordable DVDs. Playback unit 120 suitably includes input/output 830, a processor 806 and video processing system 820. Video processing system 820 suitably includes hardware circuitry and software that is formulated for reading data from a particular storage medium and for decoding the data itself.

In exemplary embodiments using MPEG-2 data recorded on DVD-ROM disks, playback unit 120 is suitably fashioned to read DVD disks provided at DVD drive 802 Alternatively or in addition to DVD drive 802, unit 120 includes a hard drive 804 that preferably provides 2 gigabytes or more of data storage, although the particular amount of disk capacity will vary dramatically from about a gigabyte to a terabyte or more in various embodiments. Of course many variations of playback unit 120 could be fashioned from conventional or non-conventional PC components. For example, various units 120 including processing circuitry 806 having one or more microprocessors (such as those available from the Intel, Cyrix, AMD, Motorola, Texas Instruments, AT&T or other corporations) and supporting one or more bus architectures could be formulated, all within the ambit of the present invention. In one embodiment, a personal computer motherboard such as a 400 MHz or faster motherboard including a PENTIUM microprocessor available from the Intel corporation of Menlo Park, California suitably integrates and controls the various playback components via a PCI bus architecture. Exemplary motherboards are available from the Intel corporation that also include SCSI interfaces to hard drives 804 and/or DVD drives 802.

Decoding is suitably performed by any hardware or software decoder device 810 such as any of various MPEG decoders that are commercially available. An exemplary decoder device 810 is an MPEGLynx MPEG-2 decoder card (available from the Stradis corporation) that communicates with the motherboard 806 though a bus interface (such as a PCI slot) 812. Alternatively, decoding may be accomplished by software running in memory and communicating with processing circuitry 806.

MPEG decoder system 820 suitably includes a reference decoder 818 that receives an external synchronization signal via, for example, a gen-lock input/output. The synchronization signal is suitably used to synchronize vertical, horizontal and color information during decoding. Decoder 810 suitably receives command information from the system bus via interface 812 and/or from an external remote control via an RS-422 interface 814 or other suitable external interface. Interface 814 also suitably decodes timecode information based upon commands received from processor 806 via the system bus. Decoded signals are suitably passed from decoder 810 to an external monitor via output driver 816.

In the illustrated embodiment, playback unit 120 is suitably controlled by user input from a touchscreen, from a remote control, or any other input device. Touchscreen (such as a Zworld model OP6500 ) may be connected to the processing circuitry 806 via a COM1 or COM2 port, for example. In various embodiments, the COM port that is not connected to the touchscreen is connected via a conventional RS-232 to RS-422 adapter board 814 or other suitable interface to a remote control device. An exemplary adapter device is a model 1C470A from Black Box Corp. of Lawrence, PA, which can provide a SONY video tape recorder 9 pin input/output connected to an external connector panel (not shown). The connector panel also provides access to other inputs and outputs of the playback unit 120, such as electrical power input, a power switch, a gen-lock input, video and audio outputs, a network interface (such as an ethernet adapter), a female 9-pin 'D' connector (for remote control inputs via, for example, the SONY betacam or Odetics RS-422 interface protocol), and/or any other suitable inputs and outputs.

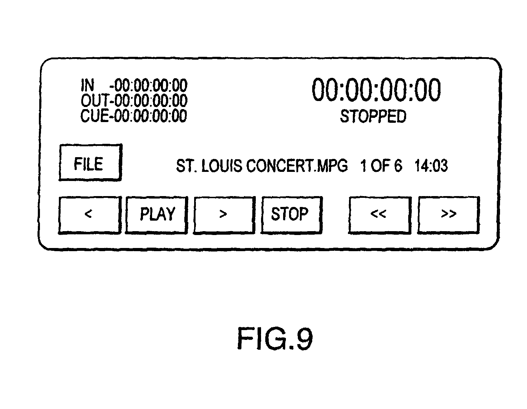

Software for playback unit 120 is suitably loaded via CD-ROM or DVD-ROM. In various embodiments, playback unit 120 is designed to boot directly into an operating system such as Windows 98/NT/2000 that loads a server application without requiring keyboard, mouse or VGA monitor connections. The server application suitably provides a replacement for video tape player playback to access the archived material stored on DVD or on hard drive 804 or on another device. Users interact with the server application via the touchscreen, remote control, or another input device as appropriate. Typically, file names are displayed on the touchscreen and users are allowed to scroll through the various names to search for or select a desired video clip. An exemplary screen display is shown in Figure 9. As can be readily observed, the main screen provides a status display and motion control buttons as appropriate. The screen also suitably provides feedback on the particular video clip, such as the file name, file duration, etc. such that users select particular video clips to be viewed as desired. In various embodiments, the users selects video clips by referencing a timecode on the video stream 150. Player 120 suitably locates the particular timecode and provides the relevant clip for viewing.

The corresponding structures, materials, acts and equivalents of all elements in the claims below are intended to include any structure, material or acts for performing the functions in combination with other claimed elements as specifically claimed. The scope of the invention should be determined by the appended claims and their legal equivalents, rather than by the examples given above.

## Claims

1. A method of creating an archive, the method **characterized by** the steps of
allowing at least one digital encoder (e.g.., 106) to receive an input signal (e.g.., 108), the input further including a timecode and a content;
digitizing, by the encoder (e.g.., 106), each input signal and generating at least a first digital output signal and a second digital output signal, the first output signal corresponding to timecode reference information, the second output signal corresponding to the content (e.g.., 108); and
storing the first digital output signal and the second digital output signal on a storage media (e.g., 114).

2. The method of claim 1 further **characterized by** the step of introducing a computer system (e.g., 110) in communication with the encoder (e.g.., 106) and the media storage, the computer system (e.g., 110) being configured to locate the second digital output signal on the storage media (e.g., 114) based on the first digital output signal.

3. The method of claim 2 further **characterized by** the step of introducing a playback device (e.g., 120), the playback device (e.g., 120) in communication with the computer system (e.g., 110) and being configured to display the at least second digital output signal from the storage media (e.g., 114).

4. The method of claim 3 further **characterized by** the step of allowing the playback device (e.g., 120) to display the at least first digital output signal from the storage media (e.g., 114).

5. The method of claim 2 further **characterized by** the step of allowing the playback device (e.g., 120) to display the at least first digital output signal from the storage media (e.g., 114) simultaneously with the at least second digital output signal.

6. The method of claim 5 further **characterized by** the steps of allowing the encoder (e.g.., 105) to generate at least a third digital output signal and allowing the computer system (e.g., 110) to store the at least third digital output signal on the storage media (e.g., 114).

7. The method of claim 6 further **characterized by** the step of allowing the playback device (e.g., 120) to display the at least third digital output signal from the storage media (e.g., 114).

8. The method of claim 7, the third digital output signal being selected from the group consisting of an audio signal (e.g., 308), a video signal (e.g., 306), a text-based signal (e.g., 240) and an optical character recognition signal.

9. The method of claim 4, the encoder (e.g.., 106), computer system (e.g., 110), storage media (e.g., 114) and playback device (e.g., 120) being installed in a vehicle (e.g., 540).

10. The method of claim 4, the timecode being continuous.

11. The method of claim 4, the timecode being discontinuous.

12. A system for archiving a signal, the signal including timecode information, the system **characterized by**:
at least one digital encoder (e.g.,, 106) configured to receive at least one input signal (e.g., 108), the input signal (e.g., 108) further including content, the encoder (e.g.., 106) digitizing each input signal (e.g., 108) and generating at least a first digital output signal and a second digital output signal, the first output signal corresponding to timecode reference information, the second output signal corresponding to the content, the first output signal having an archival relationship with the second output signal;
at least one storage media (e.g., 114) in communication with each digital encoder (e.g.., 106), each storage media (e.g., 114) configured to store the first digital output signal relative to the second digital output signal.

13. The system of claim 12 further **characterized by** at least one search engine (e.g., 110) in communication with the encoder (e.g.., 106) and the media storage, each search engine (e.g., 110) being configured to facilitate locating the first digital output signal.

14. The system of claim 13 further **characterized by** at least one playback device (e.g., 120) in communication with at least one search engine (e.g., 110), each playback device (e.g., 120) being configured to display the first digital output signal and the second output signal.

15. The system of claim 14, the search engine (e.g., 110) further **characterized by** a database (e.g., 114) storing the first digital output signal and the second output signal, and a search engine (e.g., 110) client configured to retrieve data from the database (e.g., 114) in response to instructions from a user.

16. The system of claim 15, each search engine (e.g., 110) further **characterized** as a server (e.g., 116), each server (e.g., 116) being configured to receive descriptive information from the user and store the descriptive information.

17. The system of claim 14, the descriptive information depicting the second digital output signal.

18. The system of claim 14, the playback device (e.g., 120) further configured to transmit a playback signal to a broadcast system.

19. The system of claim 18 the encoder (e.g.., 106), computer system (e.g., 110), search engine (e.g., 110), storage media (e.g., 114) and playback device (e.g., 120) being installed in a vehicle.

20. The system of claim 19, the encoder (eg., 106), computer system (e.g., 110), search engine (e.g., 110), storage media (e.g., 114) and playback device (e.g., 120) being installed in a vehicle.

## Patentansprüche

1. Verfahren zur Schaffung eines Archives, wobei das Verfahren durch die folgenden Schritte **gekennzeichnet** ist:
- Empfangen-Lassen eines Eingangssignals (z.B. 108) durch mindestens einen digitalen Encoder (z.B. 106), wobei das Eingangssignal weiter einen Zeitcode und einen Inhalt enthält;
- Digitalisieren durch den Encoder (z.B. 106) jedes Eingangssignals und Erzeugen mindestens eines ersten digitalen Ausgangssignals und eines zweiten digitalen Ausgangssignals, wobei das erste Ausgangssignal einer Zeitcodereferenzinformation und das zweite Ausgangssignal dem Inhalt (z.B. 108) entspricht; und
- Speichern des ersten digitalen Ausgangssignals und des zweiten digitalen Ausgangssignals auf einem Speichermedium (z.B. 114).

2. Verfahren nach Anspruch 1, weiter **gekennzeichnet durch** den Schritt des Einführens eines Computersystems (z.B. 110) in Kommunikation mit dem Encoder (z.B. 106) und dem Speichermedium, wobei das Computersystem (z.B. 110) so konfiguriert ist, dass es das zweite digitale Ausgangssignal auf dem Speichermedium (z.B. 114) auf der Grundlage des ersten digitalen Ausgangssignals lokalisiert.

3. Verfahren nach Anspruch 2, weiter **gekennzeichnet durch** den Schritt des Einführens eines Abspielgeräts (z.B. 120), wobei das Abspielgerät (z.B. 120) in Kommunikation mit dem Computersystem (z.B. 110) und so konfiguriert ist, dass es das mindestens zweite digitale Ausgangssignal vom Speichermedium (z.B. 114) anzeigt.

4. Verfahren nach Anspruch 3, weiter **gekennzeichnet durch** den Schritt, bei welchem dem Abspielgerät (z.B. 120) erlaubt wird, das mindestens erste digitale Ausgangssignal vom Speichermedium (z.B. 114) anzuzeigen.

5. Verfahren nach Anspruch 2, weiter **gekennzeichnet durch** den Schritt, bei welchem dem Abspielgerät (z.B. 120) erlaubt wird, das mindestens erste digitale Ausgangssignal vom Speichermedium (z.B. 114) gleichzeitig mit dem mindestens zweiten digitalen Ausgangssignal anzuzeigen.

6. Verfahren nach Anspruch 5, weiter **gekennzeichnet durch** die Schritte, bei welchen dem Encoder (z.B. 106) erlaubt wird, mindestens ein drittes digitales Ausgangssignal zu erzeugen, und dem Computersystem (z.B. 110) erlaubt wird, das mindestens dritte digitale Ausgangssignal auf dem Speichermedium (z.B. 114) zu speichern.

7. Verfahren nach Anspruch 6, weiter **gekennzeichnet durch** den Schritt, bei welchem dem Abspielgerät (z.B. 120) erlaubt wird, das mindestens dritte digitale Ausgangssignal vom Speichermedium (z.B. 114) anzuzeigen.

8. Verfahren nach Anspruch 7, wobei das dritte digitale Ausgangssignal aus der Gruppe ausgewählt ist, die aus einem Audiosignal (z.B. 308), einem Videosignal (z.B. 306), einem textbasierten Signal (z.B. 240) und einem Signal für optische Zeichenerkennung (OCR-Signal) besteht.

9. Verfahren nach Anspruch 4, wobei der Encoder (z.B. 106), das Computersystem (z.B. 110), das Speichermedium (z.B. 114) und das Abspielgerät (z.B. 120) in einem Fahrzeug (z.B. 540) installiert sind.

10. Verfahren nach Anspruch 4, wobei der Zeitcode kontinuierlich ist.

11. Verfahren nach Anspruch 4, wobei der Zeitcode diskontinuierlich ist.

12. System zum Archivieren eines Signals, wobei das Signal Zeitcodeinformation enthält, wobei das System **gekennzeichnet ist durch**:
- mindestens einen digitalen Encoder (z.B. 106), der zum Empfangen mindestens eines Eingangssignals (z.B. 108) konfiguriert ist, wobei das Eingangssignal (z.B. 108) weiter einen Inhalt enthält, wobei der Encoder (z.B. 106) jedes Eingangssignal (z.B. 108) digitalisiert und mindestens ein erstes digitales Ausgangssignal und ein zweites digitales Ausgangssignal erzeugt, wobei das erste Ausgangssignal einer Zeitcodereferenzinformation und das zweite Ausgangssignal dem Inhalt entspricht, wobei das erste Ausgangssignal in einem Archivverhältnis zum zweiten Ausgangssignal steht;
- mindestens ein Speichermedium (z.B. 114) in Kommunikation mit jedem digitalen Encoder (z.B. 106), wobei jedes Speichermedium (z.B. 114) so konfiguriert ist, dass es das erste digitale Ausgangssignal im Verhältnis zum zweiten digitalen Ausgangssignal speichert.

13. System nach Anspruch 12, weiter **gekennzeichnet durch** mindestens eine Suchmaschine (z.B. 110) in Kommunikation mit dem Encoder (z.B. 106) und dem Speichermedium, wobei jede Suchmaschine (z.B. 110) so konfiguriert ist, dass sie ein Lokalisieren des ersten digitalen Ausgangssignal erleichtert.

14. System nach Anspruch 13, weiter **gekennzeichnet durch** mindestens ein Abspielgerät (z.B. 120) in Kommunikation mit mindestens einer Suchmaschine (z.B. 110), wobei jedes Abspielgerät (z.B. 120) so konfiguriert ist, dass es das erste digitale Ausgangssignal und das zweite Ausgangssignal anzeigt.

15. System nach Anspruch 14, wobei die Suchmaschine (z.B. 110) weiter **dadurch gekennzeichnet ist, dass** eine Datenbank (z.B. 114) das erste digitale Ausgangssignal und das zweite Ausgangssignal speichert, und eine Suchmaschine (z.B. 110) als Client konfiguriert ist, um in Reaktion auf Anweisungen vom einem Benutzer Daten aus der Datenbank (z.B. 114) abzurufen.

16. System nach Anspruch 15, wobei jede Suchmaschine (z.B. 110) weiter als ein Server (z.B. 116) **gekennzeichnet** ist, wobei jeder Server (z.B. 116) so konfiguriert ist, dass er beschreibende Information vom Benutzer empfängt und die beschreibende Information speichert.

17. System nach Anspruch 14, wobei die beschreibende Information das zweite digitale Ausgangssignal schildert.

18. System nach Anspruch 14, wobei das Abspielgerät (z.B. 120) weiter so konfiguriert ist, dass es ein Abspielsignal an ein Sendesystem überträgt.

19. System nach Anspruch 18, wobei der Encoder (z.B. 106), das Computersystem (z.B. 110), die Suchmaschine (z.B. 110), das Speichermedium (z.B. 114) und das Abspielgerät (z.B. 120) in einem Fahrzeug installiert sind.

20. System nach Anspruch 19, wobei der Encoder (z.B. 106), das Computersystem (z.B. 110), die Suchmaschine (z.B. 110), das Speichermedium (z.B. 114) und das Abspielgerät (z.B. 120) in einem Fahrzeug installiert sind.

## Revendications

1. Méthode de création d'archive, la méthode étant **caractérisée par** les étapes :
de permettre à au moins un codeur numérique (par exemple 106) de recevoir un signal d'entrée (par exemple 108), l'entrée comprenant de plus un code de temps et un contenu ;
de numériser par le codeur (par exemple 106) chaque signal d'entrée et de générer au moins un premier signal de sortie numérique et un second signal de sortie numérique, le premier signal de sortie correspondant à l'information de référence de code de temps, le second signal de sortie correspondant au contenu (par exemple 108) et
de mise en mémoire du premier signal de sortie numérique et du second signal de sortie numérique sur un support de mémoire (par exemple 114).

2. Méthode selon la revendication 1, **caractérisée** de plus par l'étape d'introduction d'un système d'ordinateur (par exemple 110) en communication avec le codeur (par exemple 106) et le support de mémoire, le système d'ordinateur (par exemple 110) étant configuré pour localiser le second signal de sortie numérique sur le support de mémoire (par exemple 114) basé sur le premier signal de sortie numérique.

3. Méthode selon la revendication 2, **caractérisée** de plus par l'étape d'introduction d'un dispositif de lecture (par exemple 120), le dispositif de lecture (par exemple 120) étant en communication avec le système d'ordinateur (par exemple 110) et étant configuré pour visualiser le second signal de sortie numérique qui existe au moins à partir du support de mémoire (par exemple 114).

4. Méthode selon la revendication 3, **caractérisée** de plus par l'étape de permettre au dispositif de lecture (par exemple 120) de visualiser le premier signal de sortie numérique qui existe au moins à partir du support de mémoire (par exemple 114).

5. Méthode selon la revendication 2, **caractérisée** de plus par l'étape de permettre au dispositif de lecture (par exemple 120) de visualiser le premier signal de sortie numérique qui existe au moins à partir du support de mémoire (par exemple 114) simultanément avec le second signal de sortie numérique qui existe au moins.

6. Méthode selon la revendication 5, **caractérisée** de plus par les étapes de permettre au codeur (par exemple 106) de générer au moins un troisième signal de sortie numérique et de permettre au système d'ordinateur (par exemple 110) de mémoriser le troisième signal de sortie numérique qui existe au moins sur le support de mémoire (par exemple 114).

7. Méthode selon la revendication 6, **caractérisée** de plus par l'étape de permettre au dispositif de lecture (par exemple 120) de visualiser le troisième signal de sortie numérique qui existe au moins à partir du support de mémoire (par exemple 114).

8. Méthode selon la revendication 7, le troisième signal de sortie numérique étant sélectionné dans le groupe consistant en un signal audio (par exemple 308), un signal vidéo (par exemple 306), un signal basé sur du texte (par exemple 240) et un signal optique de reconnaissance de caractères.

9. Méthode selon la revendication 4, le codeur (par exemple 106), le système d'ordinateur (par exemple 110), le support de mémoire (par exemple 114) et le dispositif de lecture (par exemple 120) étant installés dans un véhicule (par exemple 540).

10. Méthode selon la revendication 4, le code de temps étant continu.

11. Méthode selon la revendication 4, le code de temps étant discontinu.

12. Système pour archiver un signal, le signal comprenant une information de code de temps, le système étant **caractérisé par** :
au moins un codeur numérique (par exemple 106) configuré pour recevoir au moins un signal d'entrée (par exemple 108), le signal d'entrée (par exemple 108) comprenant de plus un contenu, le codeur (par exemple 106) numérisant chaque signal d'entrée (par exemple 108) et générant au moins un premier signal de sortie numérique et un second signal de sortie numérique, le premier signal de sortie correspondant à l'information de référence de code de temps, le second signal de sortie correspondant au contenu, le premier signal de sortie ayant une relation d'archivage avec le second signal de sortie ;
au moins un support de mémoire (par exemple 114) en communication avec chaque codeur numérique (par exemple 106), chaque support de mémoire (par exemple 114) étant configuré pour mémoriser le premier signal de sortie numérique relatif au second signal de sortie numérique.

13. Système selon la revendication 12, **caractérisé** de plus par au moins un moteur de recherche (par exemple 110) en communication avec le codeur (par exemple 106) et le support de mérmoire, chaque moteur de recherche (par exemple 110) étant configuré pour faciliter la localisation du premier signal de sortie numérique.

14. Système selon la revendication 13, **caractérisé** de plus par au moins un dispositif de lecture (par exemple 120) en communication avec au moins un moteur de recherche (par exemple 110), chaque dispositif de lecture (par exemple 120) étant configuré pour visualiser le premier signal de sortie numérique et le second signal de sortie..

15. Système selon la revendication 14, le moteur de recherche (par exemple 110) étant **caractérisé** de plus par une base de données (par exemple 114) mémorisant le premier signal de sortie numérique et le second signal de sortie, et un moteur de recherche (par exemple 110) client configuré pour extraire des données de la base de données (par exemple 114) en réponse aux instructions d'un utilisateur.

16. Système selon la revendication 15, chaque moteur de recherche (par exemple 110) étant **caractérisé** de plus comme serveur (par exemple 116), chaque serveur (par exemple 116) étant configuré pour recevoir des informations descriptives de l'utilisateur et pour mémoriser les informations descriptives.

17. Système selon la revendication 14, les informations descriptives décrivant le second signal de sortie numérique.

18. Système selon la revendication 14, le dispositif de lecture (par exemple 120) étant configuré de plus pour transmettre un signal de lecture à un système de diffusion.

19. Système selon la revendication 18, le codeur (par exemple 106), le système d'ordinateur (par exemple 110), le moteur de recherche (par exemple 110), le support de mémoire (par exemple 114) et le dispositif de lecture (par exemple 120) étant installés dans un véhicule.

20. Système selon la revendication 19, le codeur (par exemple 106), le système d'ordinateur (par exemple 110), le moteur de recherche (par exemple 110), le support de mémoire (par exemple 114) et le dispositif de lecture (par exemple 120) étant installés dans un véhicule.
